# EUROPEAN PATENT APPLICATION

(11) **EP 4 664 211 A1**
(43) Date of publication of application: **17.12.2025**
(21) Application number: 23920895.2
(22) Date of filing: 15.12.2023
(51) Int. Cl.: G05B 19/042

(54) **VEHICLE CONTROL METHOD AND APPARATUS, AND TERMINAL DEVICE**

(30) Priority: 09.02.2023 CN 202310150291
(71) Applicant: BYD Company Limited, Shenzhen, Guangdong 518118 (CN)
(72) Inventor: JIN, Shi, Shenzhen, Guangdong 518118 (CN); YANG, Dongsheng, Shenzhen, Guangdong 518118 (CN); LIU, Ke, Shenzhen, Guangdong 518118 (CN)
(74) Representative: Mathys & Squire
(86) International application number: PCT/CN2023/139229
(87) International publication number: WO 2024/164706

(57) **Abstract**

Provided are a vehicle control method and apparatus, and a terminal device, which are applied to a terminal device. The terminal device comprises a display screen. The method comprises: according to a first touch operation on a first display area of the display screen, generating a first control instruction for controlling vehicle steering; according to a second touch operation on a second display area of the display screen, generating a second control instruction for controlling vehicle advancing/retreating; and sending the first control instruction and the second control instruction to a vehicle-mounted communication terminal so as to control a vehicle to operate. According to the vehicle control method, steering, advancing/retreating of a vehicle are controlled by means of touch operations on a first display area and a second display area, respectively, so that the complexity of controlling the vehicle is effectively reduced.

## Description

### FIELD

The present disclosure relates to the field of vehicle intelligent control technology, and in particular, to a vehicle control method and device and terminal equipment.

### BACKGROUND

Currently, remote vehicle control technology is widely used in confined parking environments and hard-to-reach driving scenarios as it supports controlling vehicle movement outside the vehicle.

However, although existing remote vehicle control methods can achieve remote control of vehicles, the complexity of controlling the vehicle through these remote control methods is high, which causes inconvenience to users and can easily cause driving safety issues.

### SUMMARY

The embodiments of the present disclosure provide a vehicle control method, an apparatus, and a vehicle that can solve the problem of high complexity in controlling vehicles using existing remote vehicle control methods.

In the first aspect, an embodiment of the present disclosure provides a vehicle control method applied to a terminal device, wherein the terminal device disclosure a display screen, and the method includes:
a first control instruction for controlling vehicle steering is generated according to a first touch operation on a first display area of the display screen;
a second control instruction for controlling vehicle advancing/retreating is generated according to a second touch operation on a second display area of the display screen; and
the first control instruction and the second control instruction are sending to a vehicle-mounted communication terminal to control the operation of the vehicle.

In the second aspect, an embodiment of the present disclosure provides a vehicle control apparatus applied to a terminal device, wherein the terminal device comprises a display screen, and the apparatus comprises:
a first touch module, which is configured to generate the first control instruction for controlling vehicle steering according to the first touch operation on the first display area of the display screen;
a second touch module, which is configured to generate the second control instruction for controlling vehicle advancing/retreating according to the second touch operation on the second display area of the display screen; and
a sending module, which is configured to send the first control instruction and the second control instruction to the vehicle-mounted communication terminal to control the operation of the vehicle.

In the third aspect, an embodiment of the present disclosure provides a terminal device, which includes: a processor, a communication interface, a memory, and a communication bus; Among them, the processor, the communication interface, and the memory communicate with each other through the communication bus;
the memory is configured to store computer programs; and
the processor is configured to implement the vehicle control method described in the first aspect when executing a program stored in memory.

In the fourth aspect, an embodiment of the present disclosure provides a computer-readable storage medium, which have a computer program stored thereon, which, when executed by a processor, implements the vehicle control method described in the first aspect.

In the fifth aspect, an embodiment of the present disclosure provides a vehicle, which includes a terminal device as described in the third aspect.

The present disclosure has the following advantages over prior art:
In the embodiments of the present disclosure, by performing the first touch operation on the first display area of the display screen of the terminal device, the first control instruction for controlling the vehicle steering is generated, and the second touch operation on the second display area of the display screen is performed to generate the second control instruction for controlling vehicle advancing/retreating. Then, the first instruction and the second control instruction are sent to the vehicle-mounted communication terminal, enabling remote control operation of the vehicle. The method according to the present disclosure controls the steering and advancing/retreating of the vehicle through touch operations on the first display area and the second display area respectively, thereby effectively reducing the complexity of controlling the vehicle. Moreover, it facilitates users to operate simultaneously with left and right hands, making their operations more convenient and closer to user intuition. In addition, the system eliminates automated task judgment processes, thereby further reducing the complexity of vehicle control.

The above description is only an overview of the technical solution of the present disclosure. In order to have a clearer understanding of the technical means of the present disclosure, it can be implemented according to the content of the specification. In order to make the above and other objectives, features, and advantages of the present disclosure more obvious and understandable, the specific embodiments of the present disclosure are listed below.

### BRIEF DESCRIPTION OF THE DRAWINGS

In order to provide a clearer explanation of the embodiments of the present disclosure or the technical solutions in the prior art, a brief introduction will be given to the accompanying drawings required for the description of the embodiments.
FIG. 1 is a flowchart of a vehicle control method according to an embodiment of the present disclosure;
FIG. 2 is a schematic diagram of the display interface of a terminal device according to an embodiment of the present disclosure;
FIG. 3 is an enlarged view of the S007 area in FIG. 2;
FIG. 4 is a system architecture diagram for implementing the vehicle control method according to the embodiment of the present disclosure;
FIG. 5 is a schematic diagram of the structure of a vehicle remote control system according to an embodiment of the present disclosure;
FIG. 6 is a schematic diagram of the structure of a vehicle-mounted communication terminal according to an embodiment of the present disclosure;
FIG. 7 is a logical schematic diagram of a vehicle control method according to an embodiment of the present disclosure;
FIG. 8 shows the execution flowchart of step 704;
FIG. 9 is a schematic diagram of the structure of a vehicle control apparatus according to an embodiment of the present disclosure;
FIG. 10 is a structural block diagram of a terminal device according to an embodiment of the present disclosure.

### DETAILED DESCRIPTION

The exemplary embodiments of the present disclosure will be described in more detail below with reference to the accompanying drawings. Although exemplary embodiments of the present disclosure are shown in the accompanying drawings, it will be understood that the present disclosure can also be implemented in various forms and should not be limited by the embodiments described herein. On the contrary, these embodiments are provided to enable a more thorough understanding of the present disclosure and to fully convey the scope of the present disclosure to those skilled in the art.

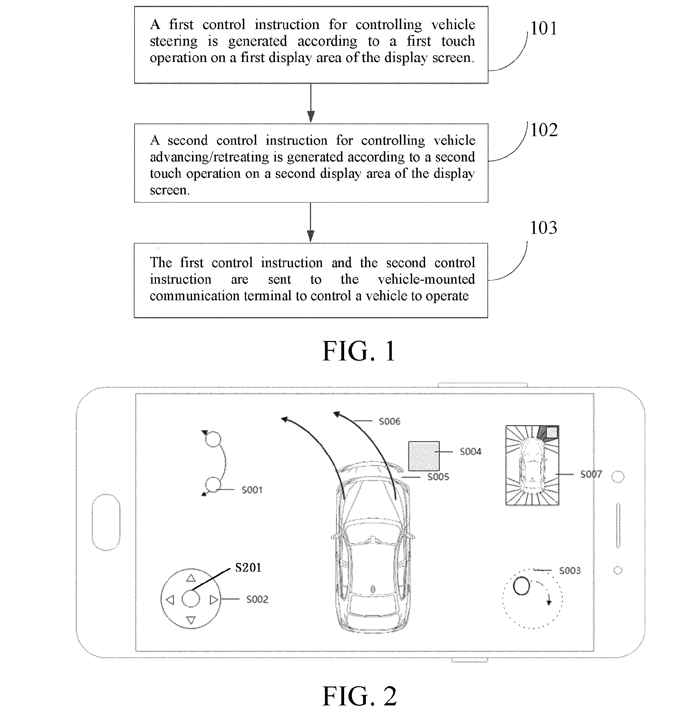

FIG.1 is a schematic diagram of a vehicle control method according to an embodiment of the present disclosure, applied to a terminal device, the terminal device includes a display screen, and the method includes steps 101 to 103.

The vehicle control method according to the embodiments of the present disclosure is applied to the terminal device, which includes the display screen. The display screen can be a touch screen for users to perform touch operations. The terminal device is communicatively connected to the vehicle-mounted communication terminal.

The terminal devices are mobile terminals, which can specifically include mobile phones and tablets. In practical applications, users can control the terminal device to establish a communication connection with the vehicle-mounted communication terminal, realizing the connection with the vehicle, so that the vehicle can receive the vehicle activation instructions issued by users through the terminal device via the vehicle-mounted communication terminal. When the vehicle receives the instruction, its remote control system will activate the vehicle.

Among them, the vehicle-mounted communication terminal includes different types of communication units, which are configured to perform information exchange between in-vehicle units, as well as information transmission between the vehicle and the terminal devices. The terminal device and the vehicle-mounted communication terminal can transmit information through different communication modules such as 5G communication module, Wi-Fi communication module, and near-field communication module.

In specific implementation, after users activate the remote control vehicle function of the terminal device, the terminal device will establish a communication connection with the vehicle using a cryptographic key. For example, through an account system, the terminal device can be paired to a user's vehicle to obtain control authorization. During the connection establishment process, the vehicle-mounted communication terminal automatically selects the method of establishing a connection according to the current network environment, such as near-field communication, wireless fidelity (Wi-Fi) connectivity, or 5G connectivity. After establishing a stable communication connection between the terminal device and the vehicle, the interface of the terminal device will remind users to wake up the vehicle. Users then issue a vehicle activation instruction through the terminal device to control the vehicle control unit (VCU) to activate the vehicle.

Step 101: a first control instruction for controlling vehicle steering is generated according to a first touch operation on a first display area of the display screen.

In this step, the first display area is the touch area configured to control wheel steering in the display interface of the terminal device after the remote control vehicle function of the terminal device is enabled. In some embodiments, as shown in FIG. 2, the first display area S002 can be disposed at the lower left area of the entire display interface. The first touch operation is a gesture operation to determine the direction of rotation of the wheel. For example, it can be the operation of pressing, rotating, or dragging in the first display area. In practical applications, a correspondence between the first touch operation and the rotation angle of the wheel is established in advance. Then, when a specific touch operation on the first display area is received, the rotation angle of the wheel can be determined according to this correspondence, and a control instruction for controlling the vehicle steering can be generated, namely the first control instruction mentioned above.

Step 102: a second control instruction for controlling vehicle advancing/retreating is generated according to a second touch operation on a second display area of the display screen.

In this step, the second display area is the touch area configured to control the advancing/retreating movement of the vehicle in the display interface of the terminal device after the remote control vehicle function of the terminal device is enabled. The second display area is a different display screen area from the first display area. In some embodiments, as shown in FIG. 2, the second display area S003 can be disposed at the lower right area of the entire display interface. The second touch operation is a gesture operation to determine the vehicle's advance and retreat requirements. For example, it can be the operation of pressing, rotating, or dragging in the second display area. In practical applications, a correspondence relationship between the second touch operation and the driving direction is established in advance. Then, when a specific touch operation on the second display area is received, the advance and retreat requirements can be determined according to this correspondence relationship, and control instruction for controlling vehicle advancing/retreating can be generated, namely the second control instruction mentioned above.

Step 103: the first control instruction and the second control instruction are sent to the vehicle-mounted communication terminal to control a vehicle to operate.

In this step, since a communication connection has been established between the terminal device and the vehicle-mounted communication terminal, the first control instruction and the second control instruction can be sent to the vehicle-mounted communication terminal, and then forwarded to the vehicle control unit. The vehicle control unit then controls the corresponding execution mechanism to execute the control instructions, thereby achieving remote control of the vehicle's operating status.

In the implementation process described above, the first control instruction for controlling vehicle steering is generated by performing the first touch operation on the first display area of the display screen of the terminal device, and a second control instruction for controlling vehicle advancing/retreating is generated by performing the second touch operation on the second display area of the display screen. Then, by sending the first and second control instructions to the vehicle-mounted communication terminal, remote control of vehicle operation can be achieved. The method according to the present disclosure controls the steering and advancing/retreating of the vehicle through touch operations on the first display area and the second display area respectively, thereby effectively reducing the complexity of controlling the vehicle. Moreover, it can facilitate users to operate simultaneously with left and right hands, making their operations more convenient and closer to user intuition. In addition, the system eliminates automated task judgment processes, thereby further reducing the complexity of vehicle control.

In an embodiment, step 101 includes steps 111 to 114.

Step 111: a first touch endpoint of the first touch operation is determined.

In this step, the final touch point of the first touch operation in the first display area is continuously determined as the first touch endpoint. It can be understood that during the continuous first touch operation, the endpoint of the first touch is dynamically updated.

Step 112: a first positional relationship between the first touch endpoint and the first display area is determined.

In this step, according to the coordinate information of the first touch endpoint on the display screen and the coordinate information of the first display area on the display screen, the positional relationship between the two is determined, namely the first positional relationship mentioned above.

Step 113: the rotation angle of the wheel according to the first positional relationship is determined.

In this step, the position of the first touch point in the first display area is determined according to the first positional relationship, and the pre-established positional relationship between the first touch endpoint and the first display area corresponds to the rotation angle of the wheel. Therefore, according to the first positional relationship, the rotation angle of the wheel required by users can be determined.

Step 114: the first control instruction is generated according to the rotation angle.

In this step, according to the rotation angle, a control instruction is generated for the vehicle control unit to control the steering mechanism of the vehicle and rotate the wheels to the rotation angle, namely the first control instruction mentioned above.

In this embodiment, the first control instruction is generated by determining the rotation angle of the vehicle according to the first position relationship between the first touch endpoint of the first touch operation and the first display area.

In an embodiment, as shown in FIG. 2, a disc is displayed in the first display area S002 to indicate the range of the first touch area to users, facilitating the first touch operation.

In an embodiment, as shown in FIG. 2, the disc displays a first button S201 that is pressable and draggable. The vehicle control method according to the embodiment of the present disclosure further includes steps 115 to 117.

In this embodiment, the first button is a virtual button that can follow users' touch operation to move within the first display area, and the first button can be a circular button.

Step 115: the first touch point of the first touch operation is determined.

In this step, the current touch point of the first touch operation within the first display area is continuously determined as the first touch point. It can be understood that during the continuous first touch operation, the first touch point is dynamically updated.

Step 116: the first position information is determined according to the first touch point.

In this step, the specific position information of the first button displayed in the first display area is determined according to the current touch point of the first touch operation, namely the first position information mentioned above.

In some embodiments, step 116 specifically includes: the first position information is determined according to the first touch point when the touch starting point of the first touch operation is located in the area where the first button is located. Only when the current position of the first button is touched by pressing, touching, or other means through the first touch operation, will the first position information be updated, that is, the first button will be triggered for mobile display.

Step 117: the first button is displayed in the first display area according to the first position information.

In this step, the first button is displayed at the current touch point of the first touch operation, which can achieve a follow-display effect of the first button, making it easier for users to know the current steering angle of the wheel.

In some embodiments, directional keys can be displayed on the disc to indicate users to touch and adjust the rotation angle of the wheels.

In the embodiment, the first button is displayed in the first display area according to the first touch point of the first touch operation, which can achieve the follow-display effect of the first button and facilitate users to know the current steering angle of the wheel.

In some embodiments, in a specific implementation, the first display area is circular. The step 113 includes steps 1131 to 1132:
Step 1131: the connecting line between the first touch endpoint and a center point of the first display area is determined according to the first positional relationship.

In this step, since the first positional relationship describes the positional relationship between the first touch endpoint and the first display area, the connecting line between the first touch endpoint and the center point of the first display area can be determined according to the first positional relationship.

Step 1132: the rotation angle is determined according to the angle between the connecting line and the target radius of the first display area.

In this step, the target radius can be any radius of the first display area. Since the connecting line passes through the center point of the first display area, creating an intersection point between the connecting line and the target radius, thus forming an angle. Therefore, the rotation angle of the wheel can be determined according to the above angle.

In some embodiments, in the case where there are two angles between the connecting line and the target radius of the first display area, an angle less than 180 ° is used as the angle control input, and the rotation angle is determined based on the mapping relationship between the angle control input and the rotation angle of the wheel.

For example, taking the 6 o'clock and 12 o'clock positions of the first display area as the boundary, and the first button is located to the left and right of the boundary; it corresponds to the wheel's rotation angle in the respective direction. The angle between the connecting line and the radius in the 12 o'clock direction of the first display area, which is less than 180 degrees, is used as the angle control input. Based on the mapping relationship between this angle control input and the rotation angle of the wheel, the required rotation angle of the wheel is determined.

Among them, suitable mapping tables can be created according to the motion characteristics of different vehicles for table lookup, and then the rotation angle is output by table lookup according to the angle control input. Alternatively, the relationship curve between the angle and the rotation angle of the wheel can be acquired by fitting experimentally determined angle inputs and the corresponding rotation angle of the wheel, and then the rotation angle can be output according to the combination of the angle and the relationship curve.

In this embodiment, the first button that is pressable and draggable in the first display area is displayed in the first display area, and the first button is dragged to any position within the first display area through a first touch operation to control the rotation angle of the wheel, and the control process is intuitive and convenient.

In an embodiment, step 102 includes steps 121 to 124:
Step 121: a touch trajectory direction and a touch sliding rate of the second touch operation in the second display area are determined.

In this step, the trajectory direction and the touch sliding rate formed by the second touch operation in the second display area are acquired in real-time.

Step 122: a target driving direction according to the touch trajectory direction is determined.

In this step, according to a correspondence relationship between the touch trajectory direction of the touch operation and a driving direction, the driving direction corresponding to the touch trajectory direction is determined as the target driving direction.

In some embodiments, in a specific implementation, step 122 specifically includes: the target driving direction is determined as advancing when the touch trajectory direction is clockwise; the target driving direction is determined as retreating when the touch trajectory direction is counterclockwise.

In this embodiment, the target driving direction is determined as advancing when touching the second display area clockwise while the target driving direction is determined as retreating when touching the second display area counterclockwise, enabling conveniently controlling the switch of vehicle advancing/retreating.

Step 123: the target driving speed is determined according to the touch sliding rate.

In this step, according to the correspondence relationship between the touch sliding rate of the touch operation and the driving speed of the vehicle, the driving speed corresponding to the touch sliding rate is determined as the target driving speed.

In some embodiments, in a specific implementation, the faster the touch sliding speed is set, the higher the corresponding driving speed, making it easier for users to remotely control the vehicle's driving speed through terminal devices.

Step 124: the second control instruction is generated according to the target driving direction and target driving speed.

In this step, based on the target driving direction and target driving speed, the control instruction is generated for the vehicle control unit of the vehicle to control the driving mechanism of the vehicle and to control the operation of the vehicle according to the target driving direction and target driving speed, namely the second control instruction mentioned above.

In this embodiment, the second control instruction is generated by the second touch operation of users in the second display area, allowing users to visually, realistically, and intuitively control the vehicle advancing/retreating.

In another embodiment, step 102 includes steps 131 to 133:
Step 131: the touch trajectory direction of the second touch operation within the second display area is determined.

This step can be referred to step 121 for details, and will not be repeated here.

Step 132: the target driving direction is determined according to the touch trajectory direction.

This step can be referred to step 122 for details, and will not be repeated here.

Step 133: the second control instruction is generated according to the target driving direction and a preset driving speed.

In this step, when remotely controlling the vehicle, the driving speed of the vehicle is set to a fixed value, namely the preset driving speed mentioned above. Then, based on the target driving direction and the preset driving speed, the control instruction is generated for the vehicle control unit of the vehicle to control the driving mechanism of the vehicle and to control the operation of the vehicle according to the target driving direction and preset driving speed, namely the second control instruction mentioned above.

In this embodiment, the second control instruction is generated by the second touch operation of users in the second display area, allowing users to visually, realistically, and intuitively control the vehicle advancing/retreating.

In some embodiments, in a specific implementation, a second button that is pressable and draggable within the second display area is displayed in the second display area. The above method also includes steps 125 to 127.

In this embodiment, the second button is a virtual button that can follow users' touch operation to move within the second display area, and the second button can be a circular button.

Step 125: the second touch point for the second touch operation is determined.

In this step, the current touch point of the second touch operation within the second display area is continuously determined as the second touch point. It can be understood that during the continuous second touch operation, the second touch point is dynamically updated.

Step 126: the second position information is determined according to the second touch point.

In this step, the specific position information of the second button displayed in the second display area is determined according to the current touch point of the second touch operation, that is, the second position information.

Step 127: the second button is displayed in the second display area according to the second position information.

In this step, the second button is displayed at the current touch point of the second touch operation, which can achieve a follow-display effect of the second button. This not only facilitates users to perform vehicle advancing/retreating operations through the visual interface, but also makes it easier for users to know the current advancing/retreating state of the vehicle.

In an embodiment, the vehicle control method according to the embodiment of the present disclosure further includes steps 100 to 110:
Step 100: an image of the current environment of the vehicle sent by the vehicle-mounted communication terminal is received.

Step 110: the image is displayed in a third display area of the screen.

In this embodiment, after the vehicle is awakened by the terminal device, the vehicle will actively acquire the image of its current surrounding environment, and send it to the terminal device via the vehicle-mounted communication terminal for the terminal device to display in the third display area of the screen.

In some embodiments, the third display area is disposed between the first display area and the second display area. That is, after the terminal device receives the above image, it will be displayed in the third area disposed between the first display area and the second display area. In this way, it is possible to achieve a centered display of the image, making it easier for users to view the environmental state around the vehicle, and to control the vehicle's operation through simultaneous operation with left and right hands. Dual hand operation is more in line with operational logic, achieving a game-like control effect.

In some embodiments, the terminal device displays the vehicle control interface in landscape mode to remotely control the vehicle to operate. Horizontal two-handed operation better aligns with operational logic, more effectively achieves game-like control effects, facilitates better coordination between left and right hands, and enhances both the safety and accuracy of vehicle control.

In some embodiments, the image may include a surround-view image, and before the surround-view image is sent to the terminal device, the vehicle's panoramic image processing unit performs fisheye distortion correction and stitching processing on the surround-view image to acquire a 3D panoramic image.

In some embodiments, the above images may also include partial images captured by individual camera devices, allowing users to switch and view specific areas around the vehicle body.

In some embodiments, in a specific implementation, the vehicle control method described herein further includes steps 120 to 130:
Step 120: a third touch operation on the display screen is received.

In this step, the third touch operation is a gesture operation to adjust the image display state, which can be specific operations such as pressing, dragging, double clicking, etc.

Step 130: the display parameters of the image is adjusted according to the third touch operation.

In this step, according to the pre-established correspondence relationship between touch operations and display parameters, the display parameters corresponding to the third touch operation are determined, and the display state of the image is adjusted according to the display parameters.

In some embodiments, as shown in FIG. 2, the position and orientation of the panoramic image can be adjusted by finger-press-and-drag gestures in any area of the screen; alternatively, based on a zoom button S001, partial magnification of the panoramic image can be achieved by a two-finger spreading gesture, making it easier to view areas of interest around the vehicle body, thereby enable safer remote vehicle control, while a two-finger pinching gesture may be used to zoom out the panoramic image for viewing the complete environmental scene. In addition, users can also exit the surround-view mode and switch to different perspective views of the peripheral camera for detailed viewing operations. Specifically, users can also click on the camera logo on the first vehicle model to acquire images from different camera perspectives.

In an embodiment, after step 103, the vehicle control method according to the embodiment of the present disclosure further includes steps 104 to 106:
Step 104: the vehicle driving information fed back from the vehicle-mounted communication terminal is received, which includes a travel trajectory and vehicle position information for a preset future time period.

In this step, the travel trajectory is acquired by the vehicle through predicting the travel trajectory of the vehicle for a preset future time period according to the motion information fed back from the execution mechanism of the vehicle. In practical applications, vehicles input their own parameters, such as body dimensions, axle spacing, coordinates of the front and rear axle centers, vehicle yaw angle, and front wheel steering angle, into the vehicle kinematic model to predict the travel trajectory of the vehicle over a preset future time period, and to calculate the relationship expression for the coordinates of each body vertex relative to the coordinate of the front and rear axle centers through geometric relationships. Then, based on the running direction and running speed of the vehicle, the vehicle position information for a preset future time period under the current motion state is determined. Among them, the preset time period can be 1s, 2s, etc.

Step 105: the first vehicle model of the vehicle is displayed in the third display area.

In this step, according to the vehicle's body parameters, the first vehicle model is constructed and displayed in the third display area for users to easily view the vehicle and its environment.

Step 106: according to the target driving direction, the travel trajectory and markers are displayed in the first orientation of the first vehicle model, where the markers are configured to indicate the vehicle position information.

In this step, the first orientation is the orientation corresponding to the target driving direction. The first vehicle model is displayed in the third display area, and the travel trajectory and markers are displayed dynamically in the orientation corresponding to the target driving direction of the first vehicle model, so that users can know the travel trajectory and the position information of the vehicle for a preset future time period under the current motion state.

In some embodiments, if the target driving direction is advancing, the travel trajectory and vehicle position information will be displayed ahead of the first vehicle model. For example, as shown in FIG. 2, the travel trajectory S006 for the next 2 seconds is displayed ahead of the first vehicle model, and the head area S005 of the first vehicle model is dynamically displayed as a reminder.

In an embodiment, the vehicle control method according to the embodiment of the present disclosure further includes steps 107 to 109:
Step 107: obstacle position information fed back from the vehicle-mounted communication terminal is received.

In this step, the obstacle position information is acquired by the perception system of the vehicle (such as radar, etc.), and then sent to the terminal device via the vehicle-mounted communication terminal. The obstacle position information is used to describe the actual orientation and actual range of the obstacle to the vehicle.

Step 108: a second vehicle model of the vehicle is displayed in the fourth display area of the screen.

In this step, according to the vehicle's body parameters, the second vehicle model is constructed and displayed in the fourth display area for users to easily view the positional relationship between the vehicle and surrounding obstacles.

Step 109: the obstacle model is displayed in the second orientation of the second vehicle model according to the obstacle position information.

In this step, since the obstacle position information describes the actual orientation and actual area range of the obstacle to the vehicle, the virtual orientation corresponding to the actual orientation in the second vehicle model can be determined as the second position based on the obstacle position information, and the obstacle model S004 can be displayed in the second position based on the actual area range, as shown in FIG. 2, for users to visualize the positional relationship between the vehicle and the obstacle. Among them, the obstacle model can specifically be the outline of the obstacle.

In an embodiment, after step 103, the vehicle control method according to the embodiment of the present disclosure further includes steps 201 to 202:
Step 201: collision warning information fed back from the vehicle-mounted communication terminal is received.

In this step, the vehicle acquires distance analysis of obstacles around the vehicle through multiple monitoring radars, calculates the orientation and the distance information of obstacles, and then makes collision warning judgment in combination with the vehicle operational status information fed back by the execution mechanism, and time aligns the collision warning information with the data to be uploaded. The collision warning information is then timesynchronized with the data to be uploaded, and is sent to the terminal device via the vehicle-mounted communication terminal. Among them, the vehicle operational status information includes current wheel angle information, wheel speed information, and vehicle state information of the vehicle fed back in real time by an electronic power steering system (EPS), a VCU, and an intelligent integrated power brake system (IPB), respectively.

Step 202: the collision warning information is displayed in the second orientation of the second vehicle model according to the collision warning information.

In this step, after receiving the collision warning information, the terminal device determines the orientation of the vehicle that is about to collide, determines the virtual orientation corresponding to the vehicle orientation in the second vehicle model as a third direction, and displays the collision warning information in the third direction to more intuitive and accurately remind users of the collision.

Specifically, the surrounding space of the vehicle is divided into distinct blockshaped areas based on the mounting position of the radar in advance. For example, when six radars are installed respectively at the front and rear of the vehicle, the surrounding space can be partitioned into 14 areas, among which 12 areas at the vehicle's front and rear sections are warningenabled. The radars may be ultrasonic radars, millimeter-wave radars, or laser radars.

After receiving the obstacle distance information fed back from various radars, the vehicle performs comprehensive weighting processing, determines that the distance between the vehicle and the obstacle is less than the set distance threshold, determines that there is a collision risk in the corresponding area, generates collision warning information indicating the area where the vehicle is about to collide, and sends it to the terminal device. Then, the terminal device will display the collision warning information in the corresponding area of the generated second vehicle model, such as filling it with prominent colors.

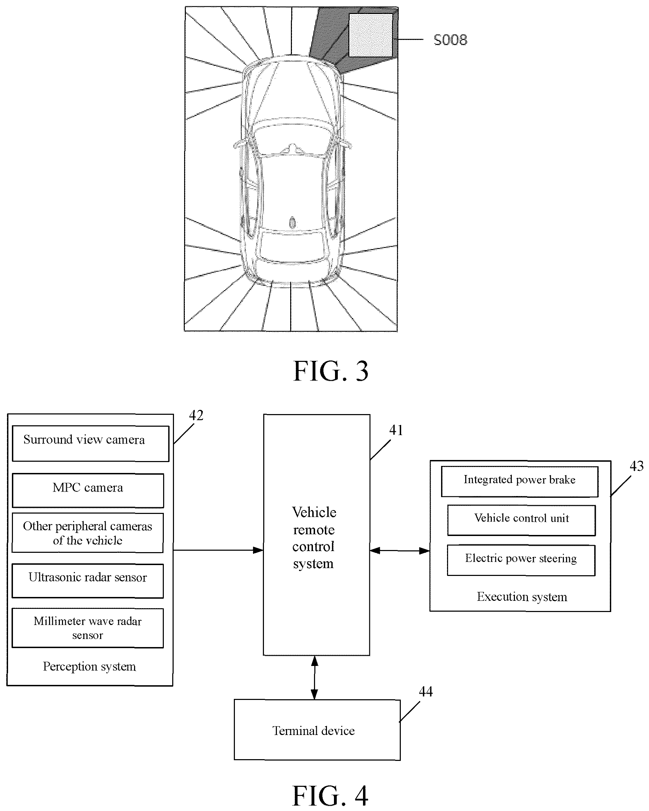

In some embodiments, as shown in FIGS. 2 and 3, the second vehicle model is displayed in the upper right corner area S007 of the display screen of the terminal device, when collision risk is detected in area S008, a prominent warning color is displayed in that area.

In some embodiments, when displaying the collision warning information, feedback and reminders can also be provided to users by controlling the vibration of terminal devices or by controlling the signal lights of terminal devices.

The vehicle control method according to the embodiments of the present disclosure completes the vehicle remote control process solely relying on the perception information provided by the vehicle and the operation instructions provided by users, without any automated task judgment process involved, enabling users to perform the vehicle remote control process more clearly through perception information fed back by the vehicle.

To implement the above-mentioned vehicle control method, as shown in FIG. 4, the vehicle is equipped with a vehicle remote control system 41; the vehicle remote control system 41 is electrically connected to the vehicle's perception system 42 and an execution system 43. The perception information describing the current surrounding environment of the vehicle can be acquired by the perception system 42, to determine the presence of obstacles around the vehicle, the distance between the vehicle and obstacles, and image information of the vehicle's surroundings. At the same time, perception information describing the vehicle's operating status is acquired by executing system 43. Then, the vehicle remote control system 41 processes the perception information fed back by the perception system 42 and combines it with the perception information fed back by the execution system 43 to provide feedback on the vehicle's driving state to the terminal device. After users send the operation instruction through the terminal device, the vehicle remote control system parses the operation instruction and sends it to the execution system to complete the execution.

Among them, after the perception information acquired by the perception system 42 is analyzed, if the vehicle remote control system determines that the distance between the vehicle body and the obstacle is less than the preset threshold, or if it determines that the future vehicle travel trajectory will collide with the obstacle under the current vehicle motion state, it will send collision warning information to the terminal device 44. The terminal device will display prominent reminder colors in the corresponding orientation area of the vehicle model based on the collision warning information, so that users can control the vehicle's speed and direction to avoid obstacles according to the prompt information provided by the vehicle remote control system 41. When the distance between the vehicle body and the obstacle is greater than or equal to the preset threshold and the collision risk is eliminated, the reminder color will also be correspondingly removed.

Among them, the perception system 42 includes a surround view camera and an ultrasonic radar sensor. The surround view camera is configured to acquire surround view images around the vehicle and generate an around view monitor (AVM) through graphic stitching to assist users in remotely controlling the vehicle. The ultrasonic radar sensors can acquire the distance between the vehicle and surrounding obstacles to help users perceive the surrounding environment of the vehicle.

In some embodiments, the perception system 42 may also include a MultiPurpose Front Camera (MPC) and other peripheral cameras of the vehicle to capture images of the surrounding environment, facilitating users to switch perspectives for viewing.

In some embodiments, the perception system 42 may also include millimeter wave radar to more accurately obtain the distance between the vehicle and surrounding obstacles to help users perceive the surrounding environment of the vehicle.

Among them, the execution system 43 includes an electric power steering (EPS) system, a vehicle control unit (VCU), and an integrated power brake (IPB) system.

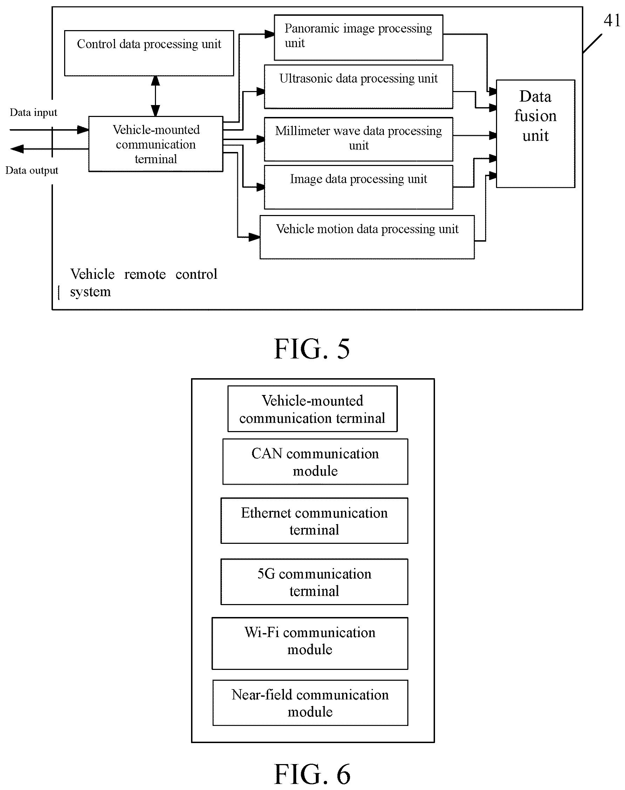

In the embodiment of the present disclosure, the data acquired by the perception system 42 will be transmitted to the vehicle remote control system for processing through the in-vehicle communication bus. Among them, the vehicle remote control system 41, as shown in FIG. 5, includes a control data processing unit, a vehicle-mounted communication terminal, a panoramic image processing unit, an ultrasonic data processing unit, a vehicle motion data processing unit, and a data fusion unit. It may also include a millimeter wave data processing unit and an image processing unit. The vehicle-mounted communication terminal is responsible for the transmission and sending of data. Different processing units in the vehicle remote control system will acquire their own data information via the vehicle-mounted communication terminal for parsing process. The processed data will be fused by the data fusion unit and then sent to the vehicle-mounted communication terminal for transmission to the terminal device for visual presentation. The control data processing unit can execute control instructions sent by users through terminal devices through different execution mechanisms in the execution system, and different execution mechanisms will also feed back the vehicle's motion information to the vehicle remote control system for processing.

As shown in FIG. 6, the vehicle-mounted communication terminal includes a CAN communication module, an Ethernet terminal module, a 5G communication module, a Wi Fi communication module, and a near-field communication module, enables the vehicle-mounted communication terminal to automatically establish a communication connection with the terminal device according to the current network environment and perform data transmission.

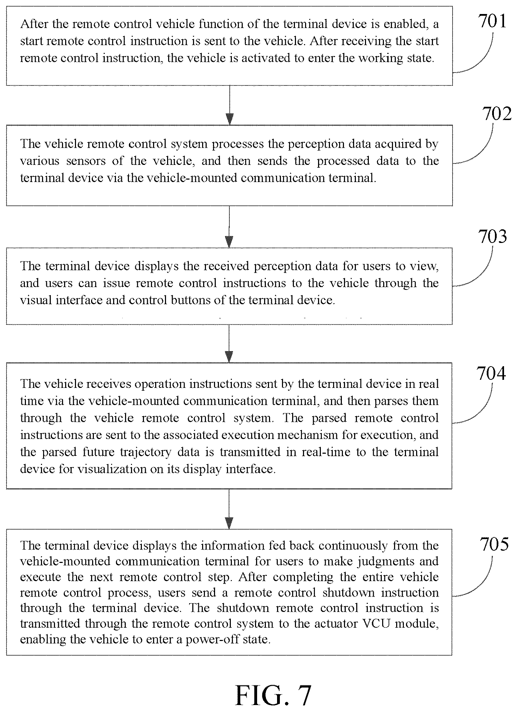

Please refer to FIG. 7, which shows the logical schematic of the vehicle control method according to the embodiment of the present disclosure.

As shown in FIG.7, in step 701, after the remote control vehicle function of the terminal device is enabled, a start remote control instruction is sent to the vehicle. After receiving the start remote control instruction, the vehicle is activated to enter the working state. Among them, the vehicle-mounted communication terminal of the vehicle includes different types of communication units, which are configured to perform information exchange between in-vehicle units and information transmission between the vehicle and terminal devices.

In step 702, the vehicle remote control system processes the perception data acquired by various sensors of the vehicle, and then sends the processed data to the terminal device via the vehicle-mounted communication terminal.

In step 703, the terminal device displays the received perception data for users to view, and users can issue remote control instructions to the vehicle through the visual interface and control buttons of the terminal device.

In step 704, the vehicle receives operation instructions sent by the terminal device in real time via the vehicle-mounted communication terminal, and then parses them through the vehicle remote control system. The parsed remote control instructions are sent to the associated execution mechanism for execution, and the parsed future trajectory data is transmitted in real-time to the terminal device for visualization on its display interface.

In step 705, the terminal device displays the information fed back continuously from the vehicle-mounted communication terminal for users to make judgments and execute the next remote control step. After completing the entire vehicle remote control process, users send a remote control shutdown instruction through the terminal device. The shutdown remote control instruction is transmitted through the remote control system to the actuator VCU module, enabling the vehicle to enter a power-off state.

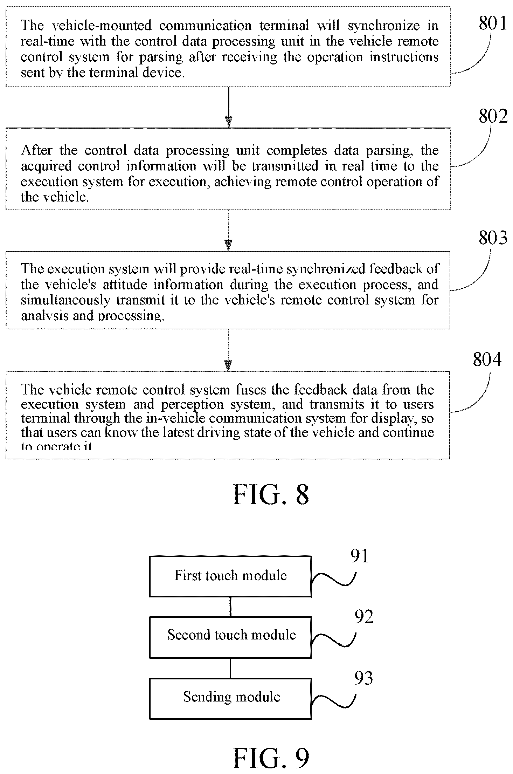

Among them, as shown in FIG. 8, the above step 704 specifically includes steps 801 to 804:
In step 801, the vehicle-mounted communication terminal will synchronize in real-time with the control data processing unit in the vehicle remote control system for parsing after receiving the operation instructions sent by the terminal device.

In step 802, after the control data processing unit completes data parsing, the acquired control information will be transmitted in real time to the execution system for execution, achieving remote control operation of the vehicle.

In step 803, the execution system will provide real-time synchronized feedback of the vehicle's attitude information during the execution process, and simultaneously transmit it to the vehicle's remote control system for analysis and processing.

In step 804, the vehicle remote control system fuses the feedback data from the execution system and perception system, and transmits it to users terminal through the in-vehicle communication system for display, so that users can know the latest driving state of the vehicle and continue to operate it.

In summary, the vehicle control method according to the embodiments of the present disclosure offers the following advantages:
(1) the vehicle control method according to the embodiments rely on panoramic imaging, millimeter-wave or ultrasonic distance warnings, enable remote vehicle control solely through vehicle information provided by mobile terminals. This eliminates the need for physical visual confirmation around the vehicle, significantly enhancing the convenience of remote vehicle operation.
(2) in the vehicle control method according to the embodiments, a horizontal grip vehicle remote control gesture is adopted, which is more in line with the gaming operation experience compared to portrait screen operation, facilitating better coordination between left and right hands, and improving the safety and accuracy of vehicle control.
(3) In the vehicle control method according to the embodiments of the present disclosure, dual finger amplification and rotation operations are supported, and the distance between the vehicle and obstacles, as well as the travel trajectory of the vehicle for a preset future time period, are fed back in real time to the terminal device, greatly improving the convenience of operation.
(4) The vehicle control method according to the embodiments of the present disclosure is based on existing mature equipment and technology, and runs entirely based on user instructions, making it more controllable and effectively balancing implementation difficulty, convenience, and safety.

FIG. 9 is a schematic diagram of a vehicle control apparatus according to an embodiment of the present disclosure, applied to a terminal device, the terminal device includes a display screen, and the apparatus includes:
a first touch module 91, which is configured to generate a first control instruction for controlling vehicle steering according to a first touch operation on a first display area of the screen;
a second touch module 92, which is configured to generate a second control instruction for controlling vehicle advancing/retreating according to a second touch operation on a second display area of the screen;
a sending module 93, which is configured to send the first control instruction and the second control instruction to the vehicle-mounted communication terminal to control a vehicle to operate.

In some embodiments, in the vehicle control apparatus, the first touch module 91 includes:
a first determining unit, which is configured to determine a first touch endpoint of the first touch operation;
a second determining unit, which is configured to determine a first positional relationship between the first touch endpoint and the first display area;
a third determining unit, which is configured to determine the rotation angle of the wheel according to the first positional relationship;
a first instruction generation unit, which is configured to generate the first control instruction according to the rotation angle.

In some embodiments, a first button that is pressable and draggable is displayed in the first display area. The apparatus further includes:
a first determination module, which is configured to determine a first touch point of the first touch operation;
the second determination module, which is configured to determine first position information according to the first touch point;
the sixth display module, which is configured to display the first button in the first display area according to the first position information.

In some embodiments, the first display area is circular. The third determining unit includes:
a third determining subunit, which is configured to determine a connecting line between the first touch endpoint and a center point of the first display area according to the first positional relationship; and
the fourth definite subunit, which is configured to determine the rotation angle according to an angle between the connecting line and the target radius of the first display area.

In some embodiments, the second touch module 92 includes:
the fourth determining unit, which is configured to determine a touch trajectory direction and a touch sliding rate of the second touch operation within the second display area;
the fifth determining unit, which is configured to determine a target driving direction according to the touch trajectory direction;
the sixth determining unit, which is configured to determine a target driving speed according to the touch sliding rate; and
the second instruction generation unit, which is configured to generate the second control instruction according to the target driving direction and target driving speed.

In some embodiments, the fifth determining unit, which is specifically configured to determine that the target driving direction is forward when the touch trajectory direction is clockwise; and determine that the target driving direction is retreating, when the touch trajectory direction is counterclockwise.

In some embodiments, the second display area displays a second button that is pressable and draggable in the second display area. The second touch module 92 further includes:
the seventh determining unit, which is configured to determine a second touch point of the second touch operation;
the eighth determining unit, which is configured to determine a second position information according to the second touch point; and
a display unit, which is configured to display the second button in the second display area according to the second position information.

In some embodiments, the apparatus further includes:
the first receiving module, which is configured to receive an image of the current environment of the vehicle sent by the vehicle-mounted communication terminal; and
the first display module, which is configured to display an image in a third display area of the display screen.

In some embodiments, the apparatus further includes:
the second receiving module, which is configured to receive the vehicle driving information f feedback from the vehicle-mounted communication terminal after sending the first control instruction and the second control instruction to the vehicle-mounted communication terminal. The vehicle driving information includes a travel trajectory and vehicle position information for a preset future time period;
the second display module, which is configured to display a first vehicle model of the vehicle in the third display area; and
the third display module, which is configured to display the travel trajectory and markers in a first orientation of the first vehicle model according to the target driving direction, where the markers are configured to indicate the vehicle position information.

In some embodiments, the apparatus further includes:
the third receiving module, which is configured to receive obstacle position information sent by the vehicle-mounted communication terminal;
the fourth display module, which is configured to display a second vehicle model of the vehicle in a fourth display area of the display screen; and
the fifth display module, which is configured to display the obstacle model in a second orientation of the second vehicle model according to the obstacle position information.

In some embodiments, the apparatus further includes:
the fourth receiving module, which is configured to receive collision warning information feedback from the vehicle-mounted communication terminal after sending the first control instruction and the second control instruction to the vehicle-mounted communication terminal; and
a reminder module, which is configured to display the collision warning information in a third orientation of the second vehicle model.

In some embodiments, the apparatus further includes:
the third receiving module, which is configured to receive a third touch operation on the display screen; and
a display adjustment module, which is configured to adjust the display parameters of the environmental image according to the third touch operation.

In some embodiments, the second touch module 92 includes:
the ninth determining unit, which is configured to determine the touch trajectory direction of the second touch operation within the second display area;
the tenth determining unit, which is configured to determine the target driving direction according to the touch trajectory direction; and
the third instruction generation unit, which is configured to generate the second control instruction according to the target driving direction and a preset driving speed.

For the apparatus according to the above embodiments, as they are basically similar to the vehicle control method embodiments, please refer to the partial description of the method embodiments for relevant information.

The vehicle control apparatus according to the embodiments of the present disclosure controls the steering and advancing/retreating of the vehicle through touch operations on the first display area and the second display area, thereby effectively reducing the complexity of controlling the vehicle. Moreover, it can facilitate users to operate simultaneously with left and right hands, making their operations more convenient and closer to user intuition, and making remote control interaction clearer. In addition, the system eliminates automated task judgment processes, thereby further reducing the complexity of vehicle control.

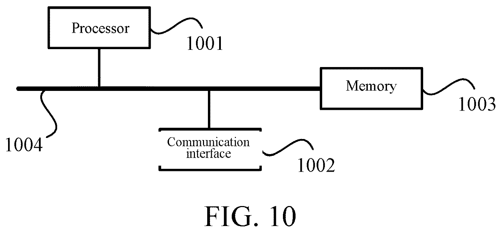

The present embodiment further provides a terminal device, as shown in FIG. 10, including a processor 1001, a communication interface 1002, and a memory 1003, and a communication bus 1004. Among them, the processor 1001, the communication interface 1002, and the memory 1003 communicate with each other through the communication bus 1004.

The memory 1003 is configured to store computer programs.

The processor 1001 is configured to, when executing the program stored in the memory 1003, perform the following steps:
generate a first control instruction for controlling vehicle steering according to a first touch operation on a first display area of the display screen;
generate a second control instruction for controlling vehicle advancing/retreating according to a second touch operation on a second display area of the display screen;
send the first control instruction and the second control instruction to a vehicle-mounted communication terminal to control a vehicle to operate.

In addition, the processor 1001 may also perform other steps in the vehicle control method, which will not be repeated here.

The communication bus mentioned in the above terminal devices can be a peripheral component interconnect (PCI) bus or an extended industry standard architecture (EISA) bus, etc. This communication bus can be divided into address bus, data bus, control bus, etc. For ease of representation, only one thick line is used in the figure, but it does not indicate that there is only one bus or one type of bus.

The communication interface is used for communication between terminal devices and other devices.

Memory can include random access memory (RAM) or non-volatile memory, such as at least one disk memory. In some embodiments, the memory can also be at least one storage device located remotely from the processor.

The processor can be a general-purpose processor, including a central processing unit (CPU), a network processor (NP), etc.; It can also be a digital signal processing (DSP), application specific integrated circuit (ASIC), field programmable gate array (FPGA), or other programmable logic devices, discrete gates or transistor logic devices, or discrete hardware components.

In another embodiment provided by the present disclosure, a computer program product containing instructions is further provided, which, when run on a computer, causes the computer to execute the vehicle control method described in the above embodiment.

In another embodiment provided by the present disclosure, a computer-readable storage medium is further provided, which stores instructions that, when run on a computer, cause the computer to execute the vehicle control method described in the above embodiment.

In another embodiment provided by the present disclosure, a vehicle is further provided, which includes the terminal device as described above.

In another embodiment provided by the present disclosure, a computer program product containing instructions is further provided, which, when run on a computer, causes the computer to execute the vehicle control method described in the above embodiment.

In the above embodiments, it can be fully or partially implemented through software, hardware, firmware, or any combination thereof. When implemented using software, it can be fully or partially implemented in the form of a computer program product. The computer program product includes one or more computer instructions. When loading and executing the computer program instructions on a computer, all or part of the process or function described in the embodiments of the present disclosure is generated. The computer may be a general-purpose computer, a specialized computer, a computer network, or other programmable device. The computer instructions can be stored in computer-readable storage media or transmitted from one computer-readable storage medium to another. For example, the computer instructions can be transmitted from a website site, a computer, a server, or a data center to another website site, computer, server, or data center through wired (such as coaxial cable, fiber optic cable, digital subscriber line (DSL)) or wireless (such as infrared, wireless, microwave, etc.) means. The computer-readable storage medium can be any available medium that a computer can access, or a data storage device such as a server or data center that integrates one or more available media. The available media can be magnetic media (such as floppy disks, hard drives, magnetic tapes), optical media (such as DVDs), or semiconductor media (such as solid state disks (SSDs)).

It should be noted that in this article, relational terms such as first and second are only used to distinguish one entity or operation from another, and do not necessarily require or imply any actual relationship or order between these entities or operations. Moreover, the terms 'including', 'containing', or any other variation thereof are intended to encompass non-exclusive inclusion, such that a process, method, item, or device that includes a series of elements includes not only those elements, but also other elements not explicitly listed, or elements inherent to such process, method, item, or device. Without further limitations, the element defined by the statement 'including one...' does not exclude the existence of other identical elements in the process, method, item, or device that includes the element in question.

Each embodiment in the present description is described in a related manner, and the same and similar parts between the embodiments can be referred to each other. Each embodiment focuses on the differences from other embodiments. For the embodiments of the apparatus, the terminal device, the computer-readable storage media, and the computer program product containing instructions, the description is relatively simple due to their basic similarity to the method embodiments. For relevant information, please refer to the partial explanation of the method embodiments.

The above description is only a preferred embodiment of the present disclosure and is not intended to limit the scope of protection of the present disclosure. Any modifications, equivalent substitutions, improvements, etc. made within the spirit and principles of the present disclosure are included within the scope of protection of the present disclosure.

## Claims

1. A vehicle control method applied to a terminal device, the terminal device comprising a display screen, the method comprising:
generating a first control instruction for controlling vehicle steering according to a first touch operation on a first display area of the display screen;
generating a second control instruction for controlling vehicle advancing/retreating according to a second touch operation on a second display area of the display screen; and
sending the first control instruction and the second control instruction to a vehicle-mounted communication terminal to control a vehicle to operate.

2. The vehicle control method according to claim 1, generating the first control instruction for controlling vehicle steering according to the first touch operation on the first display area of the display screen, comprises:
determining a first touch endpoint of the first touch operation;
determining a first positional relationship between the first touch endpoint and the first display area; and
determining the rotation angle of the wheel according to the first positional relationship;
generating the first control instruction according to the rotation angle.

3. The vehicle control method according to claim 1, a first button that is pressable and draggable is displayed in the first display area;
the method further comprising:
determining a first touch point of the first touch operation;
determining first position information according to the first touch point; and
displaying the first button in the first display area according to the first position information.

4. The vehicle control method according to claim 2, the first display area is circular; determining the rotation angle of the wheel according to the first positional relationship comprising:
determining a connecting line between the first touch endpoint and a center point of the first display area according to the first positional relationship; and
determining the rotation angle according to an angle between the connecting line and the target radius of the first display area.

5. The vehicle control method according to any one of claims 1 to 3, generating the second control instruction for controlling vehicle advancing/retreating according to the second touch operation on the second display area of the display screen comprises:
determining a touch trajectory direction and a touch sliding rate of the second touch operation within the second display area;
determining a target driving direction according to the touch trajectory direction;
determining a target driving speed according to the touch sliding rate; and
generating the second control instruction according to the target driving direction and the target driving speed.

6. The vehicle control method according to any one of claims 1 to 3, generating the second control instruction for controlling vehicle advancing/retreating according to the second touch operation on the second display area of the display screen comprises:
determining the touch trajectory direction of the second touch operation within the second display area;
determining the target driving direction according to the touch trajectory direction; and
generating the second control instruction according to the target driving direction and a preset driving speed.

7. The vehicle control method according to claim 5 or 6, determining the target driving direction according to the touch trajectory direction comprises:
determining that the target driving direction is advancing when the touch trajectory direction is clockwise; and
determining that the target driving direction is retreating when the touch trajectory direction is counterclockwise.

8. The vehicle control method according to claim 5 or 6, a second button that is pressable and draggable in the second display area is displayed in the second display area; the method further comprising:
determining a second touch point of the second touch operation;
determining a second position information according to the second touch point; and
displaying the second button in the second display area according to the second position information.

9. The vehicle control method according to any one of claims 5 to 8, the method further comprises:
receiving an image of the current environment of the vehicle sent by the vehicle-mounted communication terminal; and
displaying the image in a third display area of the display screen.

10. The vehicle control method according to claim 9, after sending the first control instruction and the second control instruction to the vehicle-mounted communication terminal, the method further comprises:
receiving vehicle driving information fed back from the vehicle-mounted communication terminal, the vehicle driving information comprising a travel trajectory and vehicle position information for a preset future time period;
displaying a first vehicle model of the vehicle in the third display area; and
displaying the travel trajectory and markers in a first orientation of the first vehicle model according to the target driving direction, where the markers being configured to indicate the vehicle position information.

11. The vehicle control method according to any one of claims 1 to 8, the method further comprises:
receiving obstacle position information sent by the vehicle-mounted communication terminal;
displaying a second vehicle model of the vehicle in a fourth display area of the display screen; and
displaying the obstacle model in a second orientation of the second vehicle model according to the obstacle position information.

12. The vehicle control method according to claim 11, after sending the first control instruction and the second control instruction to the vehicle-mounted communication terminal, the method further comprises:
receiving collision warning information feedback from the vehicle-mounted communication terminal; and
displaying the collision warning information in a third orientation of the second vehicle model according to the collision warning information.

13. The vehicle control method according to claim 9, the method further comprises:
receiving a third touch operation on the display screen; and
adjusting the display parameters of the image according to the third touch operation.

14. A terminal device, comprising: a processor, a communication interface, a memory, and a communication bus; wherein
the processor, the communication interface and the memory communicating with each other through the communication bus;
the memory being configured to store a computer program;
the processor being configured to implement the vehicle control method according to any one of claims 1 to 13 when executing a program stored in the memory.

15. A computer-readable storage medium, having a computer program stored thereon, wherein the program, when executed by a processor, implements the method of any one of claims 1 to 13.
